# EUROPEAN PATENT APPLICATION

(11) **EP 4 668 086 A1**
(43) Date of publication of application: **24.12.2025**
(21) Application number: 23932219.1
(22) Date of filing: 15.09.2023
(51) Int. Cl.: G06F 3/04845, G06F 3/0481

(54) **ELECTRONIC DEVICE AND METHOD FOR SETTING IMAGE**

(30) Priority: 03.04.2023 KR 20230043629; 10.07.2023 KR 20230088939
(71) Applicant: Samsung Electronics Co., Ltd., Suwon-si, Gyeonggi-do 16677 (KR)
(72) Inventor: BAIK, Jeongeui, Suwon-si, Gyeonggi-do 16677 (KR); PARK, Jaewon, Suwon-si, Gyeonggi-do 16677 (KR); LEE, Bomi, Suwon-si, Gyeonggi-do 16677 (KR); LEE, Wonjae, Suwon-si, Gyeonggi-do 16677 (KR); KWON, Minsoo, Suwon-si, Gyeonggi-do 16677 (KR); YIM, Soeyoun, Suwon-si, Gyeonggi-do 16677 (KR)
(74) Representative: HGF
(86) International application number: PCT/KR2023/013926
(87) International publication number: WO 2024/210285

(57) **Abstract**

An electronic device and method for setting an image are provided. The electronic device may comprise a display and at least one processor. The processor may identify objects from an image. The processor may identify the priorities of the identified objects. The processor may identify the main object on the basis of the identified priorities. The processor may remove lower-priority objects according to preset criteria. The processor may adjust a pixel value of the image on the basis of the maximum value of a preset color. The processor may identify a style on the basis of at least one of the identified objects and a state of the elements of the pixels of the display. The processor may control the display to display the image with the identified style applied.

## Description

### [Technical Field]

The disclosure relates to an electronic device and method for setting an image.

### [Background Art]

As the performance of an electronic device improves and a size of a display increases, the electronic device may display images in various states. For example, the electronic device may display a desktop background image in an operating state. Alternatively, the electronic device may display a lock screen image in a locked state, and may display constant screen image(e.g., an always on display) in a standby state (or, sleep state).

The above-described information may be provided as the related art for the purpose of helping to understand the present disclosure. No assertion or determination is made as to whether any of the foregoing is applicable as the prior art related to the present disclosure.

### [Disclosure of Invention]

### [Solution to Problem]

According to various embodiments of the present disclosure, an electronic device may include a display and at least one processor. The at least one processor may identify an object from an image. The at least one processor may identify a priority of the identified object. The at least one processor may identify a main object based on the identified priority. The at least one processor may remove a lower-priority object according to a preset criterion. The at least one processor may adjust a pixel value of the image based on a maximum value of a preset color. The at least one processor may identify a style based on at least one of the identified object or a state of a pixel element of the display. The at least one processor may control the display to display an image to which the identified style is applied.

According to various embodiments of the present disclosure, a method for setting an image by an electronic device may identify an object from an image. The method for setting an image may identify a priority of the identified object. The method for setting an image may identify a main object based on the identified priority. The method for setting an image may remove a lower-priority object according to a preset criterion. The method for setting an image may adjust a pixel value of the image based on a maximum value of a preset color. The method for setting an image may identify a style based on at least one of the identified object or a state of a pixel element of the display. The method for setting an image may display an image to which the identified style is applied.

According to various embodiments of the present disclosure, a non-transitory computer-readable storage medium on which a program for executing a method for setting an image by an electronic device is recorded may identify an object from an image. The storage medium may perform an operation of identifying a priority of the identified object. The storage medium may perform an operation of identifying a main object based on the identified priority. The storage medium may perform an operation of removing a lower-priority object according to a preset criterion. The storage medium may perform an operation of adjusting a pixel value of the image based on a maximum value of a preset color. The storage medium may perform an operation of identifying a style based on at least one of the identified object or a state of a pixel element of the display. The storage medium may perform an operation of displaying an image to which the identified style is applied.

### [Brief Description of Drawings]

FIG. 1 is a block diagram of an electronic device in a network environment according to various embodiments.
FIG. 2 is a block diagram illustrating a configuration of the electronic device according to various embodiments.
FIG. 3 is a block diagram illustrating a configuration of an external device according to various embodiments.
FIGS. 4A to 4E are diagrams for describing a process of simplifying an image according to various embodiments.
FIG. 5 is a diagram illustrating a process of adjusting pixel values of an image according to various embodiments.
FIGS. 6A to 6D are diagrams for describing styles according to various embodiments.
FIG. 7 is a diagram illustrating a UI for selecting styles according to various embodiments.
FIG. 8 is a flowchart for describing an image generation method according to various embodiments.

### [Mode for the Invention]

Hereinafter, various embodiments of the present disclosure will be described with reference to the accompanying drawings.

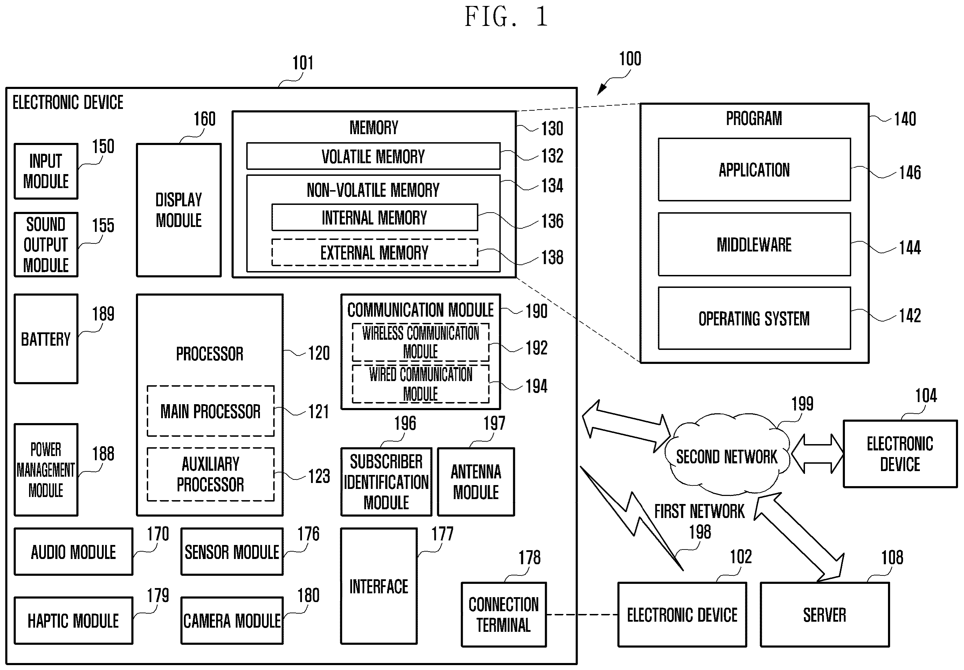

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

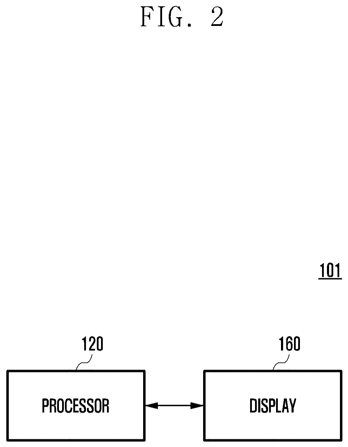

FIG. 2 is a block diagram illustrating a configuration of the electronic device according to various embodiments.

Referring to FIG. 2, the electronic device 101 may include a processor 120 (e.g., the processor 120 of FIG. 1) and a display 160 (e.g., the display module 160 of FIG. 1).

The processor 120 may control each component of the electronic device 101. The electronic device 101 may include one or more processors 120. The processor 120 may identify an object from an image and identify a priority of the identified object. For example, the processor 120 may identify a priority based on an area (or size) of an object. The processor 120 may determine an object (or a region of an object) with the largest area as a first-priority object. In addition, the processor 120 may determine a priority based on a ratio of an area relative to an area value of the largest object. In addition, the processor 120 may exclude, from object to be identified, an object whose area ratio is less than a preset ratio. For example, the processor 120 may exclude, from the object to be identified, an object whose area ratio is less than about 3% based on an object with the largest area. The processor 120 may determine the excluded object as a background region.

Alternatively, the processor 120 may identify the priority based on a distance from a center point of an image. The processor 120 may identify the priority based on a distance between the center point of the image and a preset point of the object. For example, the preset point of the object may be a center point, a left end point, a right end point, an upper end point, or a lower end point of the object, but is not limited to the above-described examples. The processor 120 may determine an object located at the center point of the image or an object closest to the center point as the first-priority object.

As described above, the processor 120 may identify the priority of the object based on the area of the object or the distance from the center point of the image. Alternatively, the processor 120 may identify the priority of the object based on the area of the object and the distance from the center point of the image. For example, the processor 120 may assign a first weight value to the area ratio of the object and a second weight value to the distance from the center point of the image. The processor 120 may identify the priority of the object based on the first weight value and the second weight value.

The processor 120 may identify a main object based on the identified priority. The processor 120 may identify an object with the highest priority as the main object. Alternatively, the processor 120 may identify an object with the largest sum of the first weight value and the second weight value as the main object. The processor 120 may remove a lower-priority object according to preset criteria. For example, the processor 120 may be set to identify five objects. When there are 6 or more identified objects, the processor 120 may identify 5 objects based on the priority and remove the remaining objects with the lower priority. Alternatively, the processor 120 may remove other objects based on the area of the object. For example, when an area of a main object 20-1 is about 15% or more, the processor 120 may remove objects with an area of less than about 5%. However, when the image is a pattern image, the processor 120 may not remove an object even when the area is less than about 5%. The processor 120 may fill a region where the object removed from the image is located with a background region based on the properties of the surrounding region (e.g., the surrounding background region). For example, the properties of the surrounding region may include lines, colors, and/or patterns.

The processor 120 may crop the surrounding region of the image so as to correspond to the size of the display based on the identified main object. For example, the size of the image may be 6400 pixels wide and 6400 pixels high, and the size of the display may be 6000 pixels wide and 6400 pixels high. The processor 120 may crop a left region and/or a right region of the image by 400 pixels. The processor 120 may additionally remove an object that is cropped by a preset ratio or more due to the cropping of the surrounding region of the image. For example, the processor 120 may additionally remove an object whose area is removed by 70% or more by the cropping. For example, when an area of a first object was 100 before being cropped and the area of the first object was 25 after being cropped, since 75% of the area of the first object is removed, the processor 120 may additionally remove the first object.

The processor 120 may simplify an image (e.g., remove the object), optimize the size of the image so as to correspond to the size of the display, and then adjust a pixel value of the image based on a maximum value of a preset color. The maximum value of the preset color may be set according to the performance of the electronic device 101 and/or the performance of the display 160. The processor 120 may extract R, G, and B values of all pixels of the image. The processor 120 may adjust the highest value among the extracted R, G, and B values to the maximum value of the preset color. In addition, the processor 120 may adjust the remaining R, G, and B values of the pixels of the image based on the ratio of the highest value among the extracted R, G, and B values and the maximum value of the preset color. For example, the maximum value of the preset color may be 128. An R value of a first pixel may be 111, a G value of the first pixel may be 161, and a B value of the first pixel may be 181, and an R value of a second pixel may be 231, a G value of the second pixel may be 216, and a B value of the second pixel may be 195. Among the R, G, and B values of the pixels to be extracted, the R value (e.g., 231) of the second pixel may be the highest value. The processor 120 may adjust (about 55.4%) the R value (e.g., 231) of the second pixel to 128. The processor 120 may also adjust the R, G, and B values of other pixels at the same ratio. Accordingly, the R value of the first pixel may be adjusted to about 61, the G value of the first pixel may be adjusted to about 89, and the B value of the first pixel may be adjusted to about 100, and the R value of the second pixel may be adjusted to about 128, the G value of the second pixel may be adjusted to about 120, and the B value of the second pixel may be adjusted to about 109.

In addition, the processor 120 may identify deterioration rates of the R, G, and B elements of each pixel. The R, G, and B elements of the display 160 may be burnedin over time, and displayable color values may gradually decrease. The processor 120 may display an image by considering the degree of deterioration of the R, G, and B elements. The processor 120 may extract the deterioration rates of the R, G, and B elements of each pixel. For example, the processor 120 may extract deterioration rates (e.g.: deterioration rates (10, 50, 22)) of pixels (e.g.: pixel (10, 56)) and store the extracted deterioration rates along with the R, G, and B values. The stored deterioration rate may be used when applying a style to an image.

The processor 120 may identify a style to be applied based on the identified object and/or the state of the pixel elements of the display 160. For example, the state of the pixel elements of the display 160 may be the deterioration state of the R, G, and B elements. The style may include color offset, brightness adjustment, rendering, and/or flat illustration. The style of the color offset may be a style that emphasizes colors of elements that are relatively less deteriorated. The style of the brightness adjustment may be a style that lowers the brightness of the image. The style of the rendering may be a style that displays only a region related to an object (e.g., the main object) with a color value related to the object, and displays the background region with the lowest color value. The style of the flat illustration may be a style that emphasizes only a line of an object (e.g., the main object) and displays a surface (or, space and margin) with the lowest color value. For example, the processor 120 may identify the styles in the order of the color offset, the brightness adjustment, the rendering, and the flat illustration.

The processor 120 may apply the style of the color offset based on the state of the pixel elements of the display 160. For example, the state of the pixel element of the display 160 may be the deterioration state of the R, G, and B elements. For example, when an average deterioration rate of the R, G, and B elements differs by 50% or more, the processor 120 may apply the style of the color offset to the image. The processor 120 may identify the average deterioration rate of the R, G, and B elements of the pixels of the display. The processor 120 may determine the offset value of the color based on the average deterioration rate. The processor 120 may apply the style of the color offset by applying the transparency of the preset ratio to the determined offset value.

When the style of the color offset is applied, the processor 120 may re-identify the deterioration rate of the element at regular time intervals to prevent the deterioration of the pixels of the display 160 and adjust the offset value based on the re-identified deterioration rate.

The processor 120 may apply the style of the brightness adjustment based on the identified object and the state of the pixel element of the display 160. For example, the processor 120 may apply the style of the brightness adjustment based on the number of identified objects, a difference between the average value of the pixels of the identified objects and the average value of pixels of the background region by the preset ratio or more, and/or the average deterioration rate of the R, G, and B elements of the pixels of the display. For example, when there is one or less identified objects, when there is a difference of 50% or more between the average value of the pixels of the object and the average value of the pixels of the background region, and/or when the average deterioration rate of the R element, the G element, or the B element is 70% or more, the processor 120 may apply the style of the brightness adjustment. For example, the processor 120 may change the R, G, and B values of the image to the preset ratio, and set the color value of the background region (or the region other than the identified object region) to 0.

The processor 120 may apply the style of the rendering based on the identified object. For example, the processor 120 may apply the style of the rendering when the identified object is located within a certain region. For example, the certain region may be set in various shapes such as a circle, a triangle, a square, and a star centered on the main object. In addition, the certain region may be a region with an area of about 30% or less of the entire image. When the identified object is included in the preset region of the image, the processor 120 may apply the style of the rendering that down-adjusts R, G, and B values of the region other than the preset region. For example, the processor 120 may apply the style of the rendering by down-adjusting color values of all pixels of the region other than the region (e.g., the preset region) including the identified object to about 50%.

The processor 120 may apply the style of the flat illustration based on the identified object. For example, when the image does not satisfy the conditions for applying the styles of the color offset, the brightness adjustment, and the rendering, and the identified object is not adjacent to the boundary of the image, the processor 120 may apply the style of the flat illustration. Alternatively, the processor 120 may remove other identified objects while leaving only the main object, and then apply the style of the flat illustration. For example, the processor 120 may apply the style of the flat illustration by changing the boundary of the identified object (or, the main object) to the maximum value of the preset color and changing the region other than the boundary to the same value (e.g., the average value of R, G, and B).

When the style of the flat illustration is applied, the processor 120 may move the preset pixels at preset time intervals to prevent the deterioration of the pixels of the display 160.

As described above, the processor 120 may determine the style to be applied to the image based on the identified object and/or the state of the pixel of the display 160. In addition, the processor 120 may apply a style selected by a user or determine a pattern of the style selected by the user for a certain period of time, and recommend the style to be applied to the image based on the determined style application pattern of the user.

The processor 120 may display the image to which the identified style has been applied. For example, the displayed image may be constant screen image(e.g., an always on display).

The processor 120 may perform an image analysis, image simplification, style application, and/or image recommendation process using an image-generative artificial intelligence model. For example, the image-generative artificial intelligence model may include a plurality of neural network layers. Each of the plurality of neural network layers may have a plurality of weight values, and perform a neural network operation through an operation between an operation result of a previous layer and a plurality of weight values. The plurality of weight values may be optimized by learning results of the image-generative artificial intelligence model. The image-generative artificial intelligence model may be trained by receiving a plurality of images as input. Examples of the plurality of neural networks may include neural networks such as a convolutional neural network (CNN), a deep neural network (DNN), a recurrent neural network (RNN), a restricted Boltzmann machine (RBM), a deep belief network (DBN), a bidirectional recurrent deep neural network (BRDNN), deep Q-networks, or generative adversarial networks (GAN).

In FIG. 2, an example in which the electronic device 101 performs a process of setting an image is described. However, the electronic device 101 and an external device (e.g., the server 108 of FIG. 1) may perform the process of setting an image together.

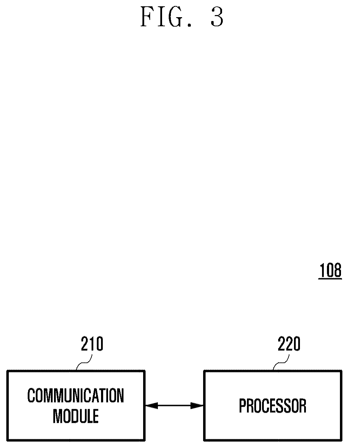

FIG. 3 is a block diagram illustrating a configuration of the external device according to various embodiments.

Referring to FIG. 3, the external device 108 includes a communication module 210 and a processor 220. For example, the external device 108 may include a server, a cloud, and/or a host terminal device.

The communication module 210 may transmit and receive data to and from the electronic device 101. For example, the communication module 210 may receive an image from the electronic device 101. Alternatively, the communication module 210 of the external device 108 may receive only data necessary for security from the electronic device 101. In this case, the electronic device 101 may transmit data related to image settings to the external device 108 through the communication module (e.g., the communication module 190 of FIG. 1). For example, the electronic device 101 may analyze the image, and extract information about the image, a region related to the image settings, and/or resources. The electronic device 101 may transmit information about a display, the information about the extracted image, the region related to the image settings, and/or the resources to the external device 108.

The processor 220 of the external device 108 may generate a setting image based on data about the received image. The processor 220 may perform a process of generating a setting image using the image-generative artificial intelligence model.

For example, the processor 220 may identify an object from an image and identify a priority of the identified object. Alternatively, the processor 220 may identify the priority of the object based on the information related to the received object. The information related to the object may include area (or size) information of the object and/or location information of the object.

For example, the processor 220 may identify the priority based on the area (or size) of the object. The processor 220 may determine an object with the largest area as a first-priority object. In addition, the processor 220 may determine a priority based on a ratio of an area relative to an area value of the largest object. In addition, the processor 220 may exclude, from the object to be identified, an object whose area ratio is less than the preset ratio. For example, the processor 220 may exclude, from the object to be identified, the object whose area ratio is less than about 10% based on the object with the largest area. The processor 220 may determine the excluded object as the background region.

Alternatively, the processor 220 may identify the priority based on the distance from the center point of the image. The processor 220 may identify the priority based on the distance between the center point of the image and the preset point of the object. For example, the preset point of the object may be the center point, the left end point, the right end point, the upper end point, or the lower end point of the object, but is not limited to the above-described examples. The processor 220 may determine the object located at the center point of the image or the object closest to the center point as the first-priority object.

Alternatively, the processor 220 may identify the priority of the object based on the area of the object and the distance from the center point of the image. For example, the processor 220 may assign the first weight value to the area ratio of the object and the second weight value to the distance from the center point of the image. The processor 220 may identify the priority of the object based on the first weight value and the second weight value.

The processor 220 may identify the main object based on the identified priority. The processor 220 may identify the object with the highest priority as the main object. Alternatively, the processor 220 may identify the object with the largest sum of the first weight value and the second weight value as the main object. The processor 220 may remove the lower-priority object according to the preset criteria. For example, the processor 220 may be set to identify five objects. When there are 6 or more identified objects, the processor 120 may identify 5 objects based on the priority and remove the remaining objects with the lower priority. The processor 220 may fill the region where the object removed from the image is located with the background region based on the properties of the surrounding region (e.g., the surrounding background region). For example, the properties of the surrounding region may include lines, colors, and/or patterns.

The processor 220 may crop the surrounding region of the image so as to correspond to the size of the display 160 of the electronic device 101 based on the identified main object. The processor 220 may additionally remove the object that is cropped by the preset ratio or more due to the cropping of the surrounding region of the image. For example, the processor 220 may additionally remove the object whose area is removed by 70% or more by the cropping. For example, when the area of the first object was 100 before being cropped and the area of the first object was 25 after being cropped, since 75% of the area of the first object is removed, the processor 220 may additionally remove the first object.

The processor 220 may simplify an image (e.g., remove the object), optimize the size of the image so as to correspond to the size of the display 160, and then adjust the pixel value of the image based on the maximum value of the preset color. The maximum value of the preset color may be set according to the performance of the electronic device 101 and/or the performance of the display 160. The processor 220 may extract the R, G, and B values of all pixels of the image. The processor 220 may adjust the highest value among the extracted R, G, and B values to the maximum value of the preset color. In addition, the processor 220 may adjust the remaining R, G, and B values of the pixels of the image based on the ratio of the highest value among the extracted R, G, and B values and the maximum value of the preset color.

In addition, the processor 220 may identify the deterioration rates of the R, G, and B elements of each pixel. The processor 220 may generate the setting image by considering the degree of deterioration of the R, G, and B elements.

The processor 220 may identify the style to be applied based on the identified object and/or the state of the pixel element of the display 160. For example, the pixel element of the display 160 may be the deterioration state of the R, G, and B elements. The style may include the color offset, the brightness adjustment, the rendering, and/or the flat illustration. For example, the processor 120 may identify the styles in the order of the color offset, the brightness adjustment, the rendering, and the flat illustration.

The processor 220 may apply the style of the color offset based on the state of the pixel element of the display 160. For example, the state of the pixel element of the display 160 may be the deterioration state of the R, G, and B elements. For example, when the average deterioration rate of the R, G, and B elements differs by 50% or more, the processor 220 may apply the style of the color offset to the image. The processor 220 may identify the average deterioration rate of the R, G, and B elements of the pixels of the display. The processor 220 may determine the offset value of the color based on the average deterioration rate. The processor 220 may apply the style of the color offset by applying the transparency of the preset ratio to the determined offset value.

The processor 220 may apply the style of the brightness adjustment based on the identified object and the state of the pixel element of the display 160. For example, the processor 220 may apply the style of the brightness adjustment based on the number of identified objects, the difference between the average value of the pixels of the identified objects and the average value of pixels of the background region by the preset ratio or more, and/or the average deterioration rate of the R, G, and B elements of the pixels of the display. For example, when there is one or less identified objects, when there is a difference of 50% or more between the average value of the pixels of the object and the average value of the pixels of the background region, and/or when the average deterioration rate of the R element, the G element, or the B element is about 70% or more, the processor 220 may apply the style of the brightness adjustment. For example, the processor 220 may change the R, G, and B values of the image to the preset ratio, and set the color value of the background region (or the region other than the identified object region) to 0.

The processor 220 may apply the style of the rendering based on the identified object. For example, the processor 220 may apply the style of the rendering when the identified object is located within a certain region. For example, the certain region may be set in various shapes such as a circle, a triangle, a square, and a star centered on the main object. In addition, the certain region may be a region with an area of about 30% or less of the entire image. When the identified object is included in the preset region of the image, the processor 220 may apply the style of the rendering that down-adjusts the R, G, and B values of the region other than the preset region. For example, the processor 220 may apply the style of the rendering by down-adjusting the color values of all pixels of the region other than the region (e.g., the preset region) including the identified object to about 50%.

The processor 220 may apply the style of the flat illustration based on the identified object. For example, when the image does not satisfy the conditions for applying the styles of the color offset, the brightness adjustment, and the rendering, and the identified object is not adjacent to the boundary of the image, the processor 220 may apply the style of the flat illustration. Alternatively, the processor 220 may remove other identified objects while leaving only the main object, and then apply the style of the flat illustration. For example, the processor 220 may apply the style of the flat illustration by changing the boundary of the identified object (or, the main object) to the maximum value of the preset color and changing the region other than the boundary to the preset same value.

As described above, the processor 220 may determine the style to be applied to the image based on the identified object and/or the state of the pixel of the display 160. In addition, the processor 220 may apply the style selected by the user or determine the pattern of the style selected by the user for a certain period of time, and recommend the style to be applied to the image based on the determined style application pattern of the user.

The processor 220 may transmit the generated setting image to the electronic device 101 through the communication module 210. Alternatively, the processor 220 may transmit data for generating the setting image. For example, the data for generating the image may include information related to an object and/or information related to a pixel. The electronic device 101 may receive the generated setting image or the data for generating the setting image from the external device 108. When the electronic device 101 receives the generated setting image from the external device 108, the received image may be displayed on the display 160. Alternatively, when the electronic device 101 receives the data for generating the setting image from the external device 108, the setting image may be generated based on the received data, and the generated setting image may be displayed on the display 160.

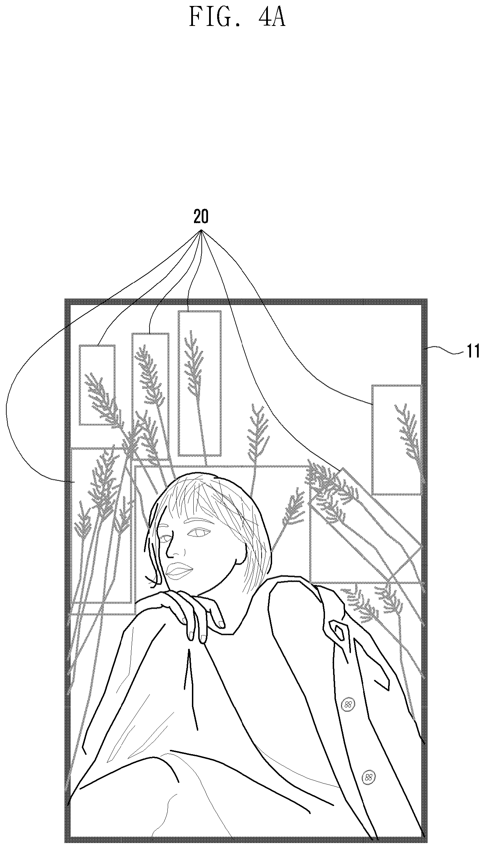

FIGS. 4A to 4E are diagrams for describing a process of simplifying an image according to various embodiments.

Referring to FIG. 4A, an image 11 from which an object 20 is extracted is illustrated. The electronic device 101 may analyze the image 11 and extract the object 20 included in the image 11. One or more objects 20 may be included in the image 11.

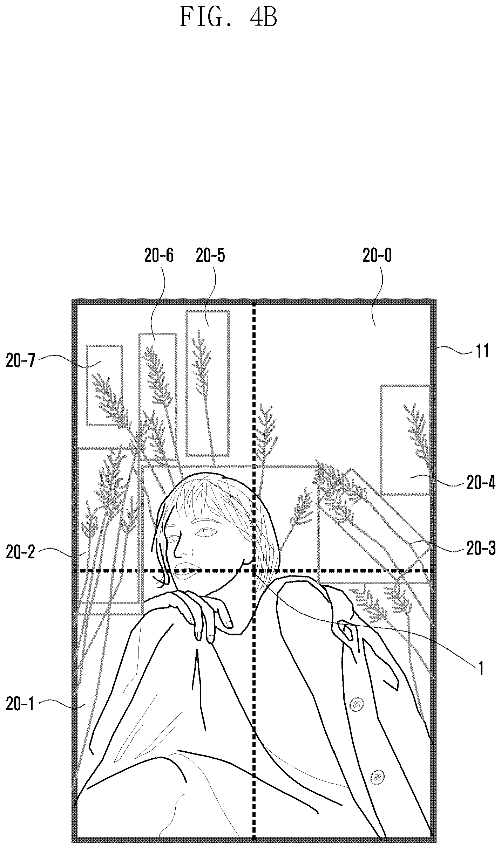

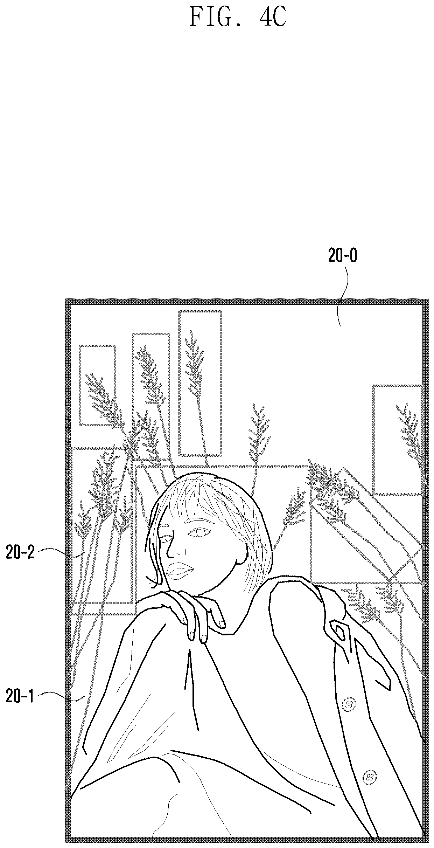

Referring to FIGS. 4B and 4C, the electronic device 101 may separate the extracted objects (or identified objects) 20-1, 20-2, 20-3, 20-4, 20-5, 20-6, and 20-7 by region. The electronic device 101 may identify a region 20-0 other than the regions of the extracted objects as the background region. The electronic device 101 may identify the priority of the extracted objects 20-1, 20-2, 20-3, 20-4, 20-5, 20-6, and 20-7.

For example, the electronic device 101 may identify the priority based on the area (or size) of the object. The electronic device 101 may determine the object (or the region of the object) 20-1 with the largest area as the first-priority object (or the region of the object). The electronic device 101 may determine the priority based on the area ratio relative to the area value of the largest object. In addition, the electronic device 101 may exclude, from the object to be identified, an object whose area ratio is less than the preset ratio. For example, the electronic device 101 may exclude, from the object to be identified, an object whose area ratio is less than about 3% based on the object 20-1 with the largest area. The electronic device 101 may determine the excluded objects as the background region 20-0.

Alternatively, the electronic device 101 may identify the priority based on the distance from the center point 1 of the image. The electronic device 101 may identify the priority based on the distance between a center point 1 of the image and the preset points of the objects 20-1, 20-2, 20-3, 20-4, 20-5, 20-6, and 20-7. For example, the preset point of the object may be the center point, the left end point, the right end point, the upper end point, or the lower end point of the object, but is not limited to the above-described examples. The electronic device 101 may determine an object located at the center point 1 of the image or an object closest to the center point as the first-priority object.

As described above, the electronic device 101 may identify the priority of the object based on the area of the object or the distance from the center point of the image. Alternatively, the electronic device 101 may identify the priority of the objects based on the areas of the objects 20-1, 20-2, 20-3, 20-4, 20-5, 20-6, and 20-7 and the distance from the center point 1 of the image. For example, the electronic device 101 may assign the first weight value to the area ratio of the object and the second weight value to the distance from the center point of the image. The electronic device 101 may identify the priority of the object based on the first weight value and the second weight value.

The electronic device 101 may identify the main object based on the identified priority. The electronic device 101 may identify the object with the highest priority as the main object. Alternatively, the electronic device 101 may identify the object with the largest sum of the first weight value and the second weight value as the main object. The electronic device 101 may remove the lower-priority object according to the preset criteria. For example, the electronic device 101 may be set to identify five objects. When there are 6 or more identified objects, the electronic device 101 may identify 5 objects based on the priority and remove the remaining objects with the lower priority. Alternatively, the electronic device 101 may remove other objects based on the area of the object. For example, when the area of the main object is about 15% or more, the electronic device 101 may remove objects having an area less than about 5%. However, when the image is a pattern image, the electronic device 101 may not remove an object even when the area is less than about 5%. The electronic device 101 may fill the region where the object removed from the image is located with the background region based on the properties of the surrounding region (e.g., the surrounding background region). For example, the properties of the surrounding region may include lines, colors, and/or patterns.

For example, as illustrated in FIG. 4B, the electronic device 101 may identify the priority of the objects in the order of the first object 20-1, the second object 20-2, the third object 20-3, the fourth object 20-4, the fifth object 20-5, the sixth object 20-6, and the seventh object 20-7 based on the area and/or the distance from the center point 1. The electronic device 101 may identify the first object 20-1 having the largest area and located at the center point 1 of the image as the main object. The electronic device 101 may remove some objects based on the preset number or the relative area of the objects.

For example, as illustrated in FIG. 4C, when the preset number is 2, the electronic device 101 may remove the third object 20-3, the fourth object 20-4, the fifth object 20-5, the sixth object 20-6, and the seventh object 20-7 excluding the first object 20-1 and the second object 20-2. Alternatively, when the area of the first object 20-1, which is the main object, is greater than or equal to a certain size (e.g., about 15% or more), the electronic device 101 may remove the third object 20-3, the fourth object 20-4, the fifth object 20-5, the sixth object 20-6, and the seventh object 20-7 whose areas are less than a certain size (e.g., less than about 3%).

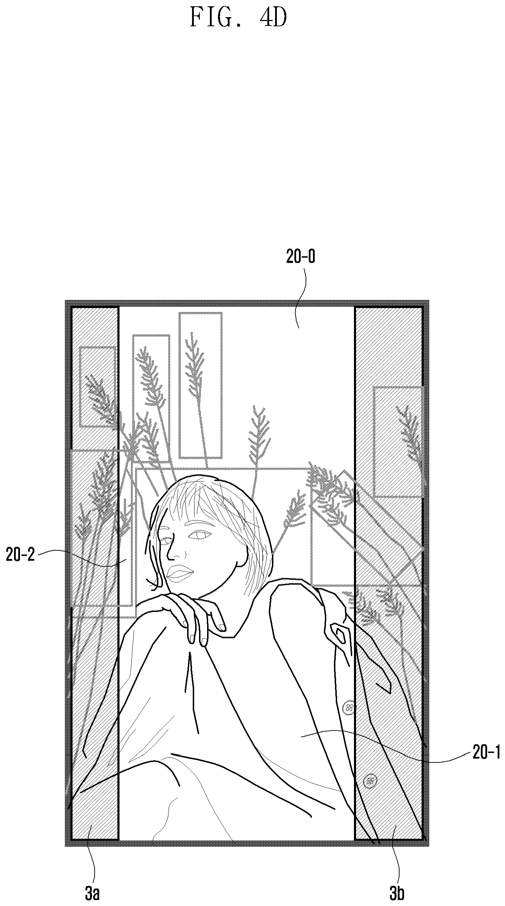

Referring to FIG. 4D, the electronic device 101 may crop the surrounding region of the image so as to correspond to the size of the display 160 based on the identified main object 20-1. For example, the size of the image may be 6400 pixels wide and 6400 pixels high, and the size of the display 160 may be 6000 pixels wide and 6400 pixels high. The electronic device 101 may crop a left region 3a and/or a right region 3b of the image by 400 pixels. The electronic device 101 may additionally remove the object that is cropped by the preset ratio or more due to the cropping of the surrounding region of the image. For example, the electronic device 101 may additionally remove the object whose area is removed by 70% or more by the cropping. For example, as illustrated in FIG. 4D, when the area of the second object 20-2 was 100 before being cropped and the area of the second object 20-2 was 20 after being cropped, the electronic device 101 may additionally remove the second object 20-2 since 80% of the area of the second object 20-2 has been removed.

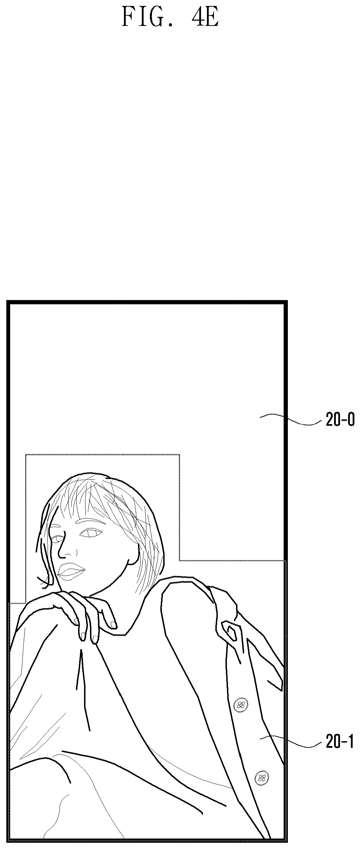

As illustrated in FIG. 4E, the electronic device 101 may simplify the image (e.g., remove the object) and generate an image whose size is optimized to correspond to the size of the display. The electronic device 101 may adjust the pixel values of the image after the simplification and size optimization of the image.

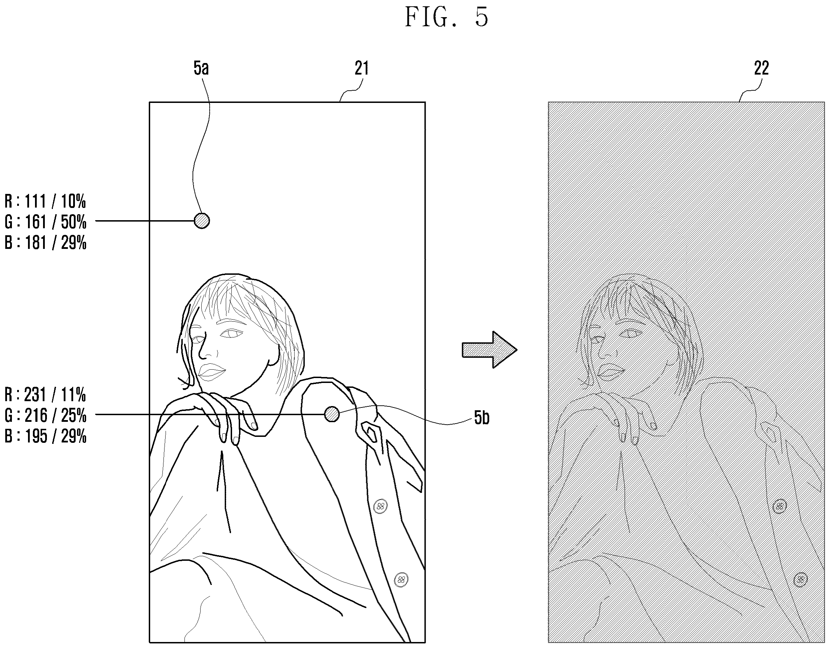

FIG. 5 is a diagram illustrating a process of adjusting pixel values of an image according to various embodiments.

Referring to FIG. 5, the electronic device 101 may extract the R, G, and B values of all pixels of the image. The electronic device 101 may adjust the highest value among the extracted R, G, and B values to the maximum value of the preset color. The preset maximum value may be set according to the performance of the electronic device 101. For example, the preset value may be one value of 110 to 128. In addition, the electronic device 101 may adjust the remaining R, G, and B values of the pixels of the image based on the ratio of the highest value among the extracted R, G, and B values and the maximum value of the preset color. In addition, the electronic device 101 may identify the deterioration rates of the R, G, and B elements of each pixel. The identified deterioration rate may be used when applying a style to an image.

For example, referring to FIG. 5, an R value of a first pixel 5a of an image 21 may be 111, a G value of the first pixel 5a may be 161, a B value of the first pixel 5a may be 181, a deterioration rate of the R element may be 10%, a deterioration rate of the G element may be 50%, and a deterioration rate of the B element may be 29%. An R value of a second pixel 5b of the image 21 may be 231, a G value of the second pixel 5b may be 216, a B value of the second pixel 5b may be 195, the deterioration rate of the R element may be 11%, the deterioration rate of the G element may be 25%, and the deterioration rate of the B element may be 29%. The deterioration rates of the R, G, and B elements of the first pixel 5a and the second pixel 5b may be stored for use when applying the style.

Among the R, G, and B values of each pixel of the image 21, the R value of the second pixel 5b may be 231, which is the highest value. The preset maximum value may be 128. The electronic device 101 may adjust the R value of the second pixel 5b to 128 (about 55.4%). The processor 101 may also adjust the R, G, and B values of other pixels at the same ratio. Accordingly, the R value of the first pixel 5a may be adjusted to about 61, the G value of the first pixel 5a may be adjusted to about 89, and the B value of the first pixel 5a may be adjusted to about 100, and the R value of the second pixel 5b may be adjusted to about 128, the G value of the second pixel 5b may be adjusted to about 120, and the B value of the second pixel 5b may be adjusted to about 109.

FIG. 5 illustrates an image 22 in which R, G, and B values of pixels 5a and 5b are adjusted. Since the color values (e.g., R, G, and B values) of all pixels are reduced, the image 22 in which the color values are adjusted may be darker than the image 21 before the color values are adjusted.

The electronic device 101 may simplify the image (e.g., remove the object) and apply the style after adjusting the pixel value. For example, the style may include the color offset, the brightness adjustment, the rendering, and/or the flat illustration. The electronic device 101 may determine the style to be applied based on the identified object and/or the state of the pixel element of the display 160. For example, the state of the pixel element of the display 160 may be the deterioration state of the R, G, and B elements. The electronic device 101 may determine the styles to be applied in the order of the color offset, the brightness adjustment, the rendering, and the flat illustration.

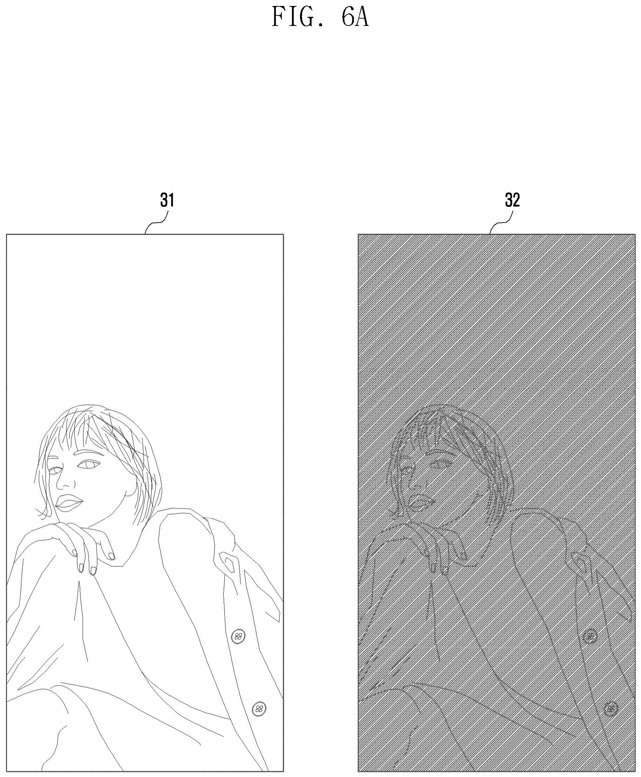

FIGS. 6A to 6D are diagrams for describing styles according to various embodiments.

FIG. 6A illustrates an original image 31 and an image 32 to which the style of the color offset is applied. For example, the style of the color offset may be a style that emphasizes colors of elements that are relatively less deteriorated.

The electronic device 101 may apply the style of the color offset based on the state of the pixel element of the display 160. For example, the state of the pixel element of the display 160 may be the deterioration state of the R, G, and B elements. For example, when the average deterioration rate of the R, G, and B elements differs by 50% or more, the electronic device 101 may apply the style of the color offset to the image. The electronic device 101 may determine the average deterioration rate of the R, G, and B elements of the pixels of the display The electronic device 101 may determine the offset value of the color based on the average deterioration rate, and may apply the style of the color offset by applying the transparency of the preset ratio to the determined offset value.

For example, the average deterioration rate of the R element may be 90%, the average deterioration rate of the G element may be 80%, and the average deterioration rate of the B element may be 10%. The electronic device 101 may determine the offset value of the color by multiplying the average deterioration rate of each element by a monochrome background having R, G, and B values, each of which is 50. The color value of the monochrome background may be set variously. The electronic device 101 may determine the offset value of R as 5, the offset value of G as 10, and the offset value of B as 45 from the color values of the monochrome background and the deterioration rates of each element. The electronic device 101 may apply a 50% transparent layer to the background of the determined offset values of R, G, and B. The electronic device 101 may generate an image 32 to which the style of the color offset is applied by applying the offset values of each color and the background to which the transparent layer is applied to the image. The offset value for the color (e.g., blue) of a relatively less deteriorated element is significantly applied to the image 32 with the color offset style, resulting in prominent display of the color of the less deteriorated element overall.

When the style of the color offset is applied, the electronic device 101 may re-identify the deterioration rate of the element at regular time intervals to prevent the deterioration of the pixels of the display 160 and adjust the offset value based on the re-identified deterioration rate. For example, the electronic device 101 may re-identify the deterioration rate of the element at weekly intervals. The electronic device 101 may re-calculate the offset value based on the changed deterioration rate of each element, and change the color value of the style of the color offset applied to the image 32 based on the re-calculated offset value.

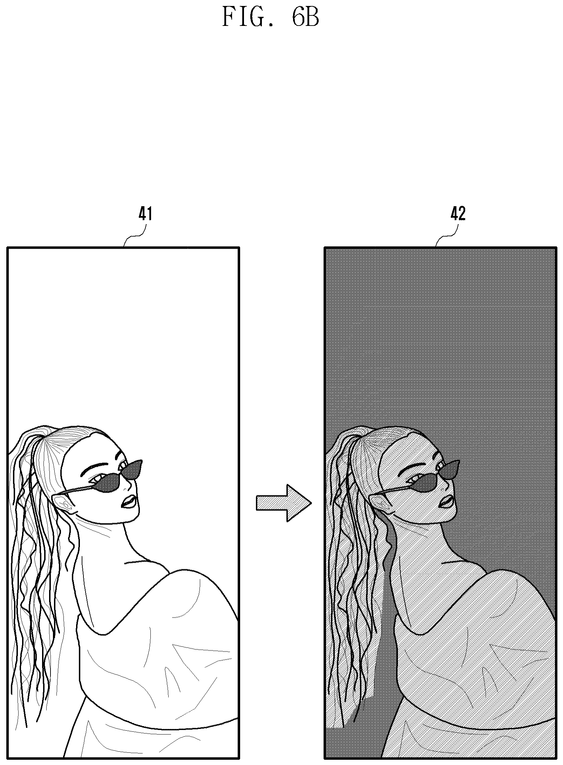

FIG. 6B illustrates an original image 41 and an image 42 to which the style of the brightness adjustment is applied. For example, the style of the brightness adjustment may be a style that lowers the brightness of the image.

The electronic device 101 may apply the style of the brightness adjustment based on the identified object and the state of the pixel element of the display 160. For example, the electronic device 101 may apply the style of the brightness adjustment based on the number of identified objects, a difference between the average value of the pixels of the identified objects and the average value of pixels of the background region by the preset ratio or more, and/or the average deterioration rate of the R, G, and B elements of the pixels of the display. As an example, when there is one or less identified objects, when there is a difference of 50% or more between the average value of the pixels of the object and the average value of the pixels of the background region, and/or when the average deterioration rate of the R, G, or B element is 70% or more, the electronic device 101 may apply the style of the brightness adjustment. For example, the electronic device 101 may change the R, G, and B values of the image to the preset ratio, and set the color value of the background region (or the region other than the identified object region) to the darkest color value or 0.

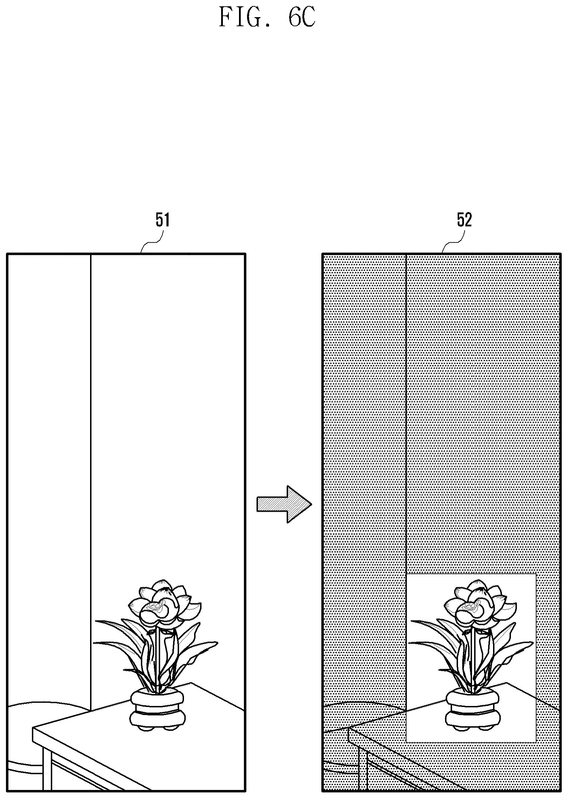

FIG. 6C illustrates an original image 51 and an image 52 to which the style of the rendering is applied. For example, the style of the rendering may be a style that displays only a region related to an object (e.g., the main object) with a related color value, and displays the background region with the lowest color value.

The electronic device 101 may apply the style of the rendering based on the identified object. For example, the electronic device 101 may apply the style of the rendering when the identified object is located within a certain region. A certain region may be set in various shapes such as a circle, a triangle, a square, and a star centered on the main object. The certain region may be a region with an area of about 30% or less of the entire image. When the identified object is included in the preset region, the electronic device 101 may apply the style of the rendering that down-adjusts the R, G, and B values of the region other than the preset region. For example, the electronic device 101 may apply the style of the rendering by down-adjusting color values of all pixels of the region other than the region (e.g., the preset region) including the identified object to 50%.

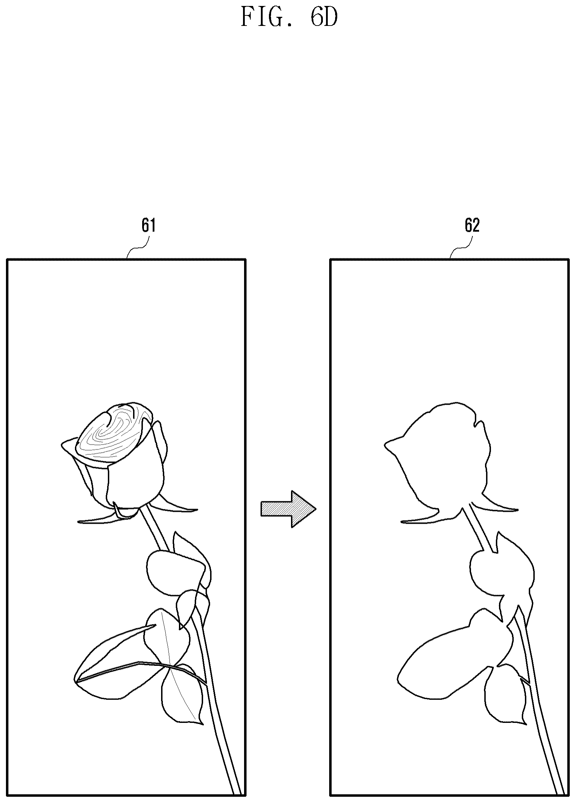

FIG. 6D illustrates an original image 61 and an image 62 to which the style of the flat illustration is applied. For example, the style of the flat illustration may be a style that emphasizes only a line of an object (e.g., the main object) and displays the remaining surfaces (or, space and margin) with the lowest color value.

The electronic device 101 may apply the style of the flat illustration based on the identified object. For example, when the image does not satisfy the conditions for applying the styles of the color offset, the brightness adjustment, and the rendering, and the identified object is not adjacent to the boundary of the image, the electronic device 101 may apply the style of the flat illustration. Alternatively, the electronic device 101 may remove other identified objects while leaving only the main object, and then apply the style of the flat illustration. For example, the electronic device 101 may apply the style of the flat illustration by changing the boundary of the identified object (or, the main object) to the maximum value of the preset color and changing the region other than the boundary to the preset same value (e.g., the average value of R, G, and B).

When the style of the flat illustration is applied, the electronic device 101 may move the preset pixels at preset time intervals to prevent the deterioration of the pixels of the display 160. For example, the electronic device 101 may move the image 62 to which the style of the flat illustration is applied to the right by 3 pixels during the day and to the left by 3 pixels during the night at 30-minute intervals. Alternatively, the electronic device 101 may move the image 62 to which the style of the flat illustration is applied within a preset range. For example, when the preset range is 15 pixels left and right, the electronic device 101 may move the image 62 to which the style of the flat illustration is applied to the right by 3 pixels 5 times and then to the left by 3 pixels 5 times at 30-minute intervals.

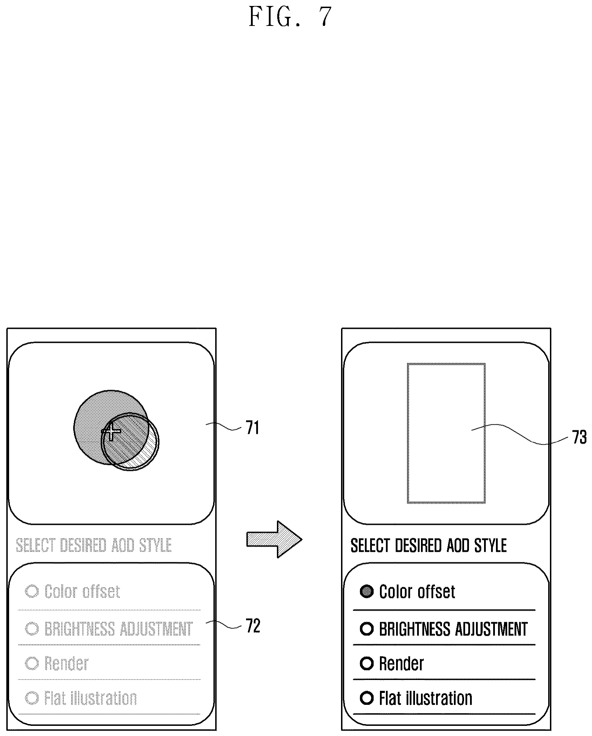

FIG. 7 is a diagram illustrating a UI for selecting styles according to various embodiments.

The electronic device 101 may apply a style selected by a user. The electronic device 101 may display an image region 71 and a style item region 72. The style item region 72 may display a type of styles. For example, the type of styles may include the color offset, the brightness adjustment, the rendering, and the flat illustration. The image region 71 may display a preview image 73. Before an image is selected, one image may be selected through the image region 71. When the image region 71 is selected (or touched or clicked) before the image is selected, the electronic device 101 may display an image list. The image list may show images stored in the electronic device 101. The user may select one image from among the images included in the image list. Alternatively, the electronic device 101 may be connected to an external device (e.g., a server, a cloud) according to the user's selection and show an image included in the external device. When the image included in the external device is selected, the electronic device 101 may download the selected image. When one image is selected, the electronic device 101 may display the preview image 73 in the image region 71.

When the image is selected and one style is selected, the electronic device 101 may display the preview image 73 to which the selected style is applied. Finally, when the style is determined, the electronic device 101 may display the image to which the determined style is applied on the display 160.

Alternatively, the electronic device 101 may determine a pattern of a style selected by a user for a certain period of time and recommend the style to be applied to the image based on the determined style application pattern of the user. When the external device 108 performs the process of simplifying the image and applying the style, the external device 108 may analyze the style pattern of the user and recommend the style.

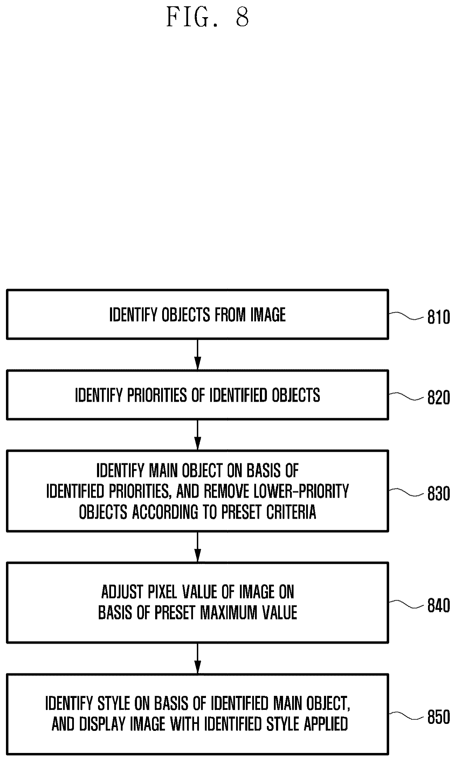

FIG. 8 is a flowchart for describing an image generation method according to various embodiments.

Referring to FIG. 8, the electronic device 101 may identify an object from an image (810). Alternatively, the electronic device 101 may exclude, from the object to be identified, an object whose area ratio is less than the preset ratio and determine the excluded objects as the background region.

The electronic device 101 may identify the priority of the identified object (820). For example, the electronic device 101 may identify the priority based on the area of the object and/or the distance of the object from the center point of the image. The electronic device 101 may calculate the area ratio of the object based on the object with the largest area and determine the priority of the object based on the area ratio. Alternatively, the electronic device 101 may determine the priority of the object based on the distance of the object from the center point of the image. Alternatively, the electronic device 101 may assign the first weight value to the object based on the area ratio and assign the second weight value to the object based on the distance. The electronic device 101 may determine the priority of the object based on the first weight value and the second weight value. For example, the ratio of the first weight value and the second weight value may be 1:1, or may be different ratios.

The electronic device 101 may identify the main object based on the identified priority and remove the lower-priority object according to the preset criteria (830). The electronic device 101 may determine the object with the largest area, the object with the closest distance to the center point of the image, or the object with the largest sum of the first weight value and the second weight value as the main object. The electronic device 101 may remove the lower-priority object based on the preset number. Alternatively, the electronic device 101 may remove the object whose area ratio is the preset ratio or less.

The electronic device 101 may optimize the size of the image. For example, the electronic device 101 may crop the surrounding region of the image so as to correspond to the size of the display 160 based on the identified main object. The electronic device 101 may additionally remove the object that is cropped by the preset ratio or more due to the cropping of the surrounding region of the image.

The electronic device 101 may adjust the pixel values of the image based on the maximum value of the preset color (840). For example, the electronic device 101 may adjust the highest value among the R, G, and B values of the pixels of the image to the maximum value of the preset color. The electronic device 101 may adjust the remaining R, G, and B values of the pixels of the image based on the ratio of the highest value among the R, G, and B values and the maximum value of the color. In addition, the electronic device 101 may determine the deterioration rates of the R, G, and B elements of the pixels of the display 160. The electronic device 101 may use the determined deterioration rate when applying the style.

The electronic device 101 may identify the style based on at least one of the identified object or the state of the pixel element of the display, and display the image to which the identified style is applied (850). For example, the style may include the color offset, the brightness adjustment, the rendering, and/or the flat illustration. The style of the color offset may be a style that emphasizes colors of elements that are relatively less deteriorated. The style of the brightness adjustment may be a style that lowers the brightness of the image. The style of the rendering may be a style that displays only the region related to the object (e.g., the main object) with the color value related to the object, and displays the background region with the lowest color value. The style of the flat illustration may be a style that emphasizes only the line of the object (e.g., the main object) and displays the surface (or, space and margin) with the lowest color value. For example, the processor 120 may identify the styles in the order of the color offset, the brightness adjustment, the rendering, and the flat illustration.

The electronic device 101 may determine the average deterioration rate of the R, G, and B elements of the pixels of the display 160. The electronic device 101 may determine the offset value of the color based on the average deterioration rate, and may apply the style of the color offset by applying at least one of the determined offset value or the transparency of the preset ratio. The electronic device 101 may redetermine the deterioration rate at preset time intervals, and adjust the offset value based on the re-determined deterioration rate.

Alternatively, the electronic device 101 may apply the style of the brightness adjustment when there is at least one of identification of one or less objects, a difference greater than or equal to a preset first value between the average value of the pixels of the identified object and the average value of the pixels of the background region, and/or a deterioration rate greater than or equal to a preset second value. The electronic device 101 may down-adjust the R, G, and B values of the region of the identified object to the preset ratio, and set the R, G, and B values of the background region to the lowest value.

Alternatively, when the identified object is included in the preset region of the image, the electronic device 101 may apply the style of the rendering that down-adjusts the R, G, and B values of the region other than the preset region. For example, the preset region may be a circle, triangle, square, or star shape.

Alternatively, when the identified object is not adjacent to the boundary of the image, the electronic device 101 may apply the style of the flat illustration that sets the boundary of the identified object to the maximum value of the color. The electronic device 101 may move the image to which the style of the flat illustration is applied at the preset time interval by the preset pixel.

For example, the electronic device 101 may include the display 160 and at least one processor 120. The at least one processor 120 may identify an object from an image. The at least one processor 120 may identify the priority of the identified object. The at least one processor 120 may identify the main object based on the identified priority. The at least one processor 120 may remove the lower-priority object according to the preset criteria. The at least one processor 120 may adjust the pixel value of the image based on the maximum value of the preset color. The at least one processor 120 may identify the style based on at least one of the identified object or the state of the pixel element of the display 160. The at least one processor 120 may control the display to display the image to which the identified style has been applied.

For example, the at least one processor 120 may assign a weight value to the object based on at least one of the area of the object or the distance of the object from the center point of the image. The at least one processor 120 may identify the priority based on the assigned weight value.

For example, the at least one processor 120 may exclude, from the identified object, the object whose area ratio is less than the preset ratio.

For example, the at least one processor 120 may crop the surrounding region of the image so as to correspond to the size of the display based on the identified main object.

For example, the at least one processor 120 may additionally remove the object that is cropped by the preset ratio or more due to the cropping of the surrounding region of the image.

For example, the at least one processor 120 may adjust the highest value among the R, G, and B values of the pixels of the image to the maximum value of the preset color. The at least one processor 120 may adjust the remaining R, G, and B values of the pixels of the image based on the ratio of the highest value among the R, G, and B values to the maximum value of the color.

For example, the style may include at least one of the color offset, the brightness adjustment, the rendering, or the flat illustration.

For example, the state of the pixel element of the display 160 may include the deterioration state of the R, G, and B elements of the pixels of the display 160. The at least one processor 120 may identify the deterioration rates of the R, G, and B elements of the pixels of the display 160.

For example, the at least one processor 120 may identify the average deterioration rate of the R, G, and B elements of the pixels of the display 160. The at least one processor 120 may determine the offset value of the color based on the average deterioration rate. The at least one processor 120 may apply the style of the color offset by applying the determined offset value and the transparency of the preset ratio.

For example, the at least one processor 120 may re-identify the deterioration rate at the preset time interval. The at least one processor 120 may adjust the offset value based on the re-identified deterioration rate.

For example, the at least one processor 120 may identify one or less object, down-adjust the R, G, and B values of the region of the identified object to the preset ratio when there is at least one of the difference greater than or equal to the preset first value between the average value of the pixels of the identified object and the average value of the pixels of the background region and the deterioration rate greater than or equal to the preset second value, and apply the style of the brightness adjustment that sets the R, G, and B values of the background region to the lowest value.

For example, the at least one processor 120 may apply the style of the rendering that down-adjusts the R, G, and B values of the region other than the preset region when the identified object is included in the preset region of the image.

For example, the at least one processor 120 may apply the style of the flat illustration that sets the boundary of the identified object to the maximum value of the color when the identified object is not adjacent to the boundary of the image.

For example, the at least one processor 120 may move the image to which the style of the flat illustration is applied at the preset time interval by the preset pixel.

For example, the at least one processor 120 may identify the pattern of the style selected by the user. The at least one processor 120 may recommend the style based on the pattern of the identified style.

For example, a method for setting an image by an electronic device may identify an object from an image (810). The method for setting an image may identify the priority of the identified object (820). The method for setting an image may identify the main object based on the identified priority. The method for setting an image may remove the lower-priority object according to the preset criteria (830). The method for setting an image may adjust the pixel value of the image based on the maximum value of the preset color (840). The method for setting an image may identify the style based on at least one of the identified object or the state of the pixel element of the display. The method for setting an image may display the image to which the identified style has been applied (850).

For example, the operation (820) of identifying the priority of the identified object may assign the weight value to the object based on at least one of the area of the object or the distance of the object from the center point of the image. The operation (820) of identifying the priority of the identified object may identify the priority based on the assigned weight value.

For example, the operation (810) of identifying the object from the image may exclude, from the object to be identified, the object whose area ratio is less than the preset ratio.

For example, the method for setting an image may crop the surrounding region of the image so as to correspond to the size of the display based on the identified main object.

For example, the method for setting an image may additionally remove the object that is cropped by the preset ratio or more due to the cropping of the surrounding region of the image.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects of the present disclosure are not limited to the above-described effects, and other effects that are not mentioned may be obviously understood by those skilled in the art from the above-described description.

## Claims

1. An electronic device, comprising:
a display; and
at least one processor,
wherein the at least one processor identifies an object from an image,
identifies a priority of the identified object,
identifies a main object based on the identified priority and removes a lower-priority object according to a preset criterion,
adjusts a pixel value of the image based on a maximum value of a preset color,
identifies a style based on at least one of the identified object or a state of a pixel element of the display, and
controls the display to display an image to which the identified style is applied.

2. The electronic device of claim 1, wherein the at least one processor assigns a weight value to the object based on at least one of an area of the object or a distance of the object from a center point of the image, and identifies the priority based on the assigned weight value.

3. The electronic device of claim 1, wherein the at least one processor excludes, from the identified object, an object whose area ratio is less than a preset ratio.

4. The electronic device of claim 1, wherein the at least one processor crops a surrounding region of the image so as to correspond to a size of the display based on the identified main object.

5. The electronic device of claim 4, wherein the at least one processor additionally removes an object cropped by a preset ratio or more due to to the cropping of the surrounding region of the image.

6. The electronic device of claim 1, wherein the at least one processor adjusts a highest value among R, G, and B values of the pixel of the image to a maximum value of the preset color, and adjusts remaining R, G, and B values of the pixel of the image based on a ratio of the highest value among the R, G, and B values and the maximum value of the color.

7. The electronic device of claim 1, wherein the style includes at least one of color offset, brightness adjustment, rendering, or flat illustration.

8. The electronic device of claim 7, wherein the state of the pixel element of the display includes a state in deterioration of R, G, and B elements of the pixel of the display, and
the at least one processor identifies deterioration rates of the R, G, and B elements of the pixel of the display.

9. The electronic device of claim 8, wherein the at least one processor identifies an average deterioration rate of the R, G, and B elements of the pixels of the display, determines an offset value of the color based on the average deterioration rate, and applies the style of the color offset by applying the determined offset value and transparency of a preset ratio.

10. The electronic device of claim 9, wherein the at least one processor re-identifies the deterioration rate at a preset time interval, and adjusts the offset value based on the re-identified deterioration rate.

11. The electronic device of claim 7, wherein the at least one processor is configured to identify one or less object, down-adjust R, G, and B values of a region of the identified object to a preset ratio when there is at least one of a difference greater than or equal to a preset first value between an average value of pixels of the identified object and an average value of pixels of a background region or a deterioration rate greater than or equal to a preset second value, and apply the style of the brightness adjustment that sets R, G, and B values of the background region to a lowest value.

12. The electronic device of claim 7, wherein, when the identified object is included in a preset region of the image, the at least one processor applies the style of the rendering to down-adjust R, G, and B values of the region other than the preset region.

13. The electronic device of claim 12, wherein, when the identified object is not adjacent to a boundary of the image, the at least one processor applies the style of the flat illustration to set the boundary of the identified object to the maximum value of the color.

14. The electronic device of claim 13, wherein the at least one processor moves an image to which the style of the flat illustration is applied at a preset time interval by a preset pixel .

15. A method for setting an image of an electronic device, comprising:
identifying an object from the image;
identifying a priority of the identified object;
identifying a main object based on the identified priority and removing a lower-priority object according to a preset criterion;
adjusting a pixel value of the image based on a maximum value of a preset color; and
identifying a style based on at least one of the identified object or a state of a pixel element of a display and displaying an image to which the identified style is applied.
